# FASCICULE DE BREVET EUROPEEN

(11) **EP 2 279 905 B1**
(45) Date de publication et mention de la délivrance du brevet: **11.07.2012**
(21) Numéro de dépôt: 10290420.8
(22) Date de dépôt: 22.07.2010
(51) Int. Cl.: B60N 2/70

(54) **Coussin de siège de véhicule automobile**
Kraftfahrzeug-Sitzkissen
Automotive vehicle seat cushion

(30) Priorité: 28.07.2009 FR 0903713
(43) Date de publication de la demande: 02.02.2011
(73) Titulaire: Centre d'Etude et de Recherche pour l'Automobile (CERA), 51100 Reims (FR)
(72) Inventeur: Mougel, Thierry, 08160 Balaives et Butz (FR)
(74) Mandataire: Sayettat, Julien Christian

(56) Documents cités:
- EP-A2- 1 000 856
- DE-A1-102006 038 572
- FR-A1- 2 662 649
- FR-A1- 2 698 832
- FR-A1- 2 905 639

## Description

L'invention concerne un coussin de siège de véhicule automobile.

Il est connu notamment du document FR-2 662 649 A1 de réaliser un coussin de siège de véhicule automobile, ledit coussin comprenant un moyen de montage en rotation, solidairement à la structure du véhicule, autour d'un bord d'articulation entre une position d'utilisation et une position escamotée, permettant notamment d'agrandir un espace de rangement des bagages.

On connaît également du document EP-1 000 856 A2 un coussin pour siège de véhicule fixé à la structure du siège par des bavettes souples faisant partie intégrante du coussin.

Usuellement, le moyen de montage est solidaire d'une armature, notamment sous forme de grille d'envers métallique, qui est intégrée au coussin pour lui donner une rigidité satisfaisante en vue de sa manipulation entre ses deux positions.

Il a été proposé de supprimer l'armature, ceci notamment à des fins d'allègement et de facilitation de recyclage du coussin en fin de vie.

Par exemple, le coussin comprend un bloc de rembourrage à base de mousse élastiquement compressible, ledit bloc surmoulant une nappe d'envers, par exemple sous forme de non tissé, ladite nappe étant rigidifiée par pénétration de la mousse dans son épaisseur et formant ainsi moyen de rigidification du coussin.

Dans ce cas, il est nécessaire de prévoir de rapporter un moyen de montage en rotation, par exemple sous forme d'insert plastique surmoulé, ce qui entraîne un surcoût et un surpoids non négligeables.

L'invention a pour but de pallier ces inconvénients.

A cet effet, l'invention propose un coussin de siège de véhicule automobile, ledit coussin comprenant un moyen de montage en rotation, solidairement à la structure du véhicule, autour d'un bord d'articulation entre une position d'utilisation et une position escamotée, caractérisé en ce que ledit moyen de montage est sous forme d'au moins une bavette souple saillant dudit bord pour former charnière souple.

Le fait d'utiliser une bavette souple est particulièrement économique et entraîne un surpoids négligeable.

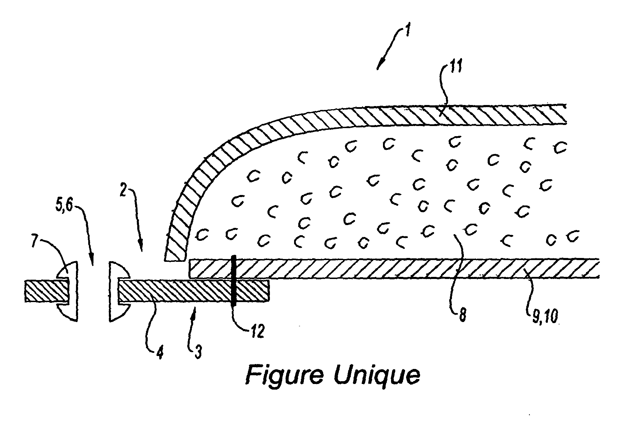

D'autres particularités et avantages de l'invention apparaîtront dans la description qui suit, faite en référence à la figure jointe qui est une vue schématique en coupe partielle d'un coussin selon un mode de réalisation.

En référence à la figure, on décrit un coussin 1 - notamment d'assise - de siège de véhicule automobile, ledit coussin comprenant un moyen de montage 2 en rotation, solidairement à la structure du véhicule, autour d'un bord d'articulation 3 - notamment un bord avant - entre une position d'utilisation et une position escamotée, ledit moyen de montage étant sous forme d'au moins une bavette 4 souple saillant dudit bord pour former charnière souple.

Généralement, dans le cas d'un coussin 1 d'assise, la position d'utilisation est sensiblement horizontale et la position escamotée sensiblement verticale.

Le moyen de montage 2 représenté sur la figure est sous forme d'une bavette 4, notamment en forme de bande. Il pourrait être prévu d'autres réalisations, le moyen de montage 2 pouvant par exemple prendre la forme de deux bavettes en forme de languettes disposées de part et d'autre du bord d'articulation 3.

Selon la réalisation représentée, l'extrémité libre de la bavette 4 est pourvue d'un moyen d'association 5 - ici sous forme d'un orifice 6 pourvu d'un oeillet 7 de renfort - solidairement à la structure du véhicule. Un organe de type « fixation quart de tour » peut être prévu pour assurer l'association attendue.

Selon une réalisation, la bavette 4 est à base de matériau fibreux, par exemple un non tissé, une moquette ou un textile.

Selon la réalisation représentée, le coussin 1 comprend un bloc 8 de rembourrage élastiquement compressible et un matériau 9 de recouvrement - ici sous forme d'une nappe inférieure 10 de renfort dudit bloc -, la bavette 4 étant solidaire dudit matériau. Le bloc 8 peut être à base de mousse - notamment de polyuréthanne - surmoulant la nappe inférieure 10 - notamment sous forme de non tissé -, la mousse pénétrant au moins en partie l'épaisseur de ladite nappe pour former une croûte de rigidification permettant un renfort dudit bloc. Cela permet notamment de s'affranchir d'une armature métallique de rigidification du coussin 1.

Selon une autre réalisation, le matériau 9 pourrait être un revêtement supérieur 11 en forme de coiffe.

Selon une réalisation non représentée, le matériau de recouvrement 9 présente une excroissance formant bavette 4.

Selon la réalisation représentée, la bavette 4 est associée - notamment par couture ou soudure 12 - au matériau de recouvrement 9.

Selon une réalisation non représentée, le coussin 1 comprend un bloc 8 de rembourrage à base de mousse élastiquement compressible, la bavette 4 comprenant une extrémité d'ancrage surmoulée par ledit bloc.

## Revendications

1. Coussin (1) de siège de véhicule automobile, ledit coussin comprenant un moyen de montage (2) en rotation, solidairement à la structure du véhicule, autour d'un bord d'articulation (3) entre une position d'utilisation et une position escamotée, ledit coussin étant **caractérisé en ce que** ledit moyen de montage est sous forme d'au moins une bavette (4) souple saillant dudit bord pour former charnière souple.

2. Coussin selon la revendication 1, **caractérisé en ce que** l'extrémité libre de la bavette (4) est pourvue d'un moyen d'association (5) solidairement à la structure du véhicule.

3. Coussin selon l'une quelconque des revendications 1 ou 2, **caractérisé en ce que** la bavette (4) est à base de matériau fibreux.

4. Coussin selon l'une quelconque des revendications 1 à 3, **caractérisé en ce qu'**il comprend un bloc (8) de rembourrage élastiquement compressible et un matériau de recouvrement (9) dudit bloc, la bavette (4) étant solidaire dudit matériau.

5. Coussin selon la revendication 4, **caractérisé en ce que** le matériau de recouvrement (9) présente une excroissance formant bavette (4).

6. Coussin selon la revendication 4, **caractérisé en ce que** la bavette (4) est associée au matériau de recouvrement (9).

7. Coussin selon l'une quelconque des revendications 1 à 3, **caractérisé en ce qu'**il comprend un bloc (8) de rembourrage à base de mousse élastiquement compressible, la bavette (4) comprenant une extrémité d'ancrage surmoulée par ledit bloc.

## Claims

1. Automotive vehicle seat cushion (1), said cushion comprising a means for assembly (2) in rotation, integral with the structure of the vehicle, around an articulation edge (3) between a position for use and a retraced position, said cushion being **characterised in that** said means for assembly has the shape of at least one flexible flap (4) protruding from said edge in order to form a flexible hinge.

2. Cushion according to claim 1, **characterised in that** the free end of the flap (4) is provided with a means of association (5) integrally with the structure of the vehicle.

3. Cushion according to any of claims 1 or 2, **characterised in that** the flap (4) has a fibrous material base.

4. Cushion according to any of claims 1 to 3, **characterised in that** it comprises a bloc (8) of elastically compressible filling and a covering material (9) for said block, the flap (4) being integral with said material.

5. Cushion according to claim 4, **characterised in that** the covering material (9) has a protuberance forming flap (4).

6. Cushion according to claim 4, **characterised in that** the flap (4) is associated top the covering material (9).

7. Cushion according to any of claims 1 to 3, **characterised in that** it comprises a block (8) of filling with a elastically compressible foam base, the flap (4) comprising an anchoring end overmoulded by said bloc.

## Patentansprüche

1. Kissen (1) für Kraftfahrzeugsitz, wobei das Kissen ein Mittel zur stark verbundenen Drehbefestigung (2) an die Struktur des Fahrzeugs, um eine Gelenkkante (3) zwischen einer Position der Verwendung und einer eingeklappten Position umfasst, wobei das Kissen **dadurch gekennzeichnet ist, dass** das Mittel zur Befestigung die Form mindestens eines flexiblen Bandes (4) aufweist, das aus der Kante herausragt, um ein flexibles Gelenk zu bilden.

2. Kissen nach Anspruch 1, **dadurch gekennzeichnet, dass** das freie Ende des Bandes(4) mit einem Mittel zur festen Verbindung (5) an die Struktur des Fahrzeugs versehen ist.

3. Kissen nach einem der Ansprüche 1 oder 2, **dadurch gekennzeichnet, dass** das Band (4) auf einem faserigen Material basiert.

4. Kissen nach einem der Ansprüche 1 bis 3, **dadurch gekennzeichnet, dass** es einen elastisch komprimierbaren Polsterblock (8) und ein Abdeckmaterial (9) des Blocks umfasst, wobei das Band (4) fest mit dem Material verbunden ist.

5. Kissen nach Anspruch 4, **dadurch gekennzeichnet, dass** das Abdeckmaterial (9) einen Vorsprung aufweist, der das Band (4) bildet.

6. Kissen nach Anspruch 4, **dadurch gekennzeichnet, dass** das Band (4) mit dem Abdeckmaterial (9) assoziiert ist.

7. Kissen nach einem der Ansprüche 1 bis 3, **dadurch gekennzeichnet, dass** es einen Polsterblock (8) auf der Grundlage eines elastisch komprimierbaren Schaums umfasst, wobei das Band (4) ein Verankerungsende aufweist, das von dem Block geformt ist.
